# EUROPÄISCHE PATENTANMELDUNG

(11) **EP 1 254 806 A2**
(43) Veröffentlichungstag der Anmeldung: **06.11.2002**
(21) Anmeldenummer: 02009587.3
(22) Anmeldetag: 26.04.2002
(51) Int. Cl.: B60P 1/64

(54) **Verriegelungseinrichtung zum Befestigen von Wechselpritschen auf einem Fahrzeugrahmen**

(30) Priorität: 02.05.2001 DE 20107474 U
(71) Anmelder: Heitmann Vertriebs AG, 3110 Münsing (CH)
(72) Erfinder: Hackenfort, Günter, Dipl.-Ing., 48739 Legden (DE)
(74) Vertreter: Bockhorni, Josef

(57) **Zusammenfassung**

Die Erfindung betrifft ein Lastfahrzeug mit Wechselaufbauten, insbesondere wechselbarer Pritsche, mit einem aus Trägern, insbesondere aus Längsträgern aufgebauten Chassis, wobei vorzugsweise auf den Längsträgern Befestigungslaschen für die Montage des Wechselaufbaus bzw. der Pritsche vorgesehen sind, auf die oder einen Teil der Befestigungslaschen des Chassis montierbaren Schnellverschlusseinrichtungen mit federnder Vorspannung für die unmittelbare Montage der Pritsche über Riegelelemente, wobei die Schnellverschlüsse vorzugsweise über eine Verbindungsmechanik zentral lösbar sind.

## Beschreibung

Die Erfindung betrifft ein Lastfahrzeug gemäß dem Oberbegriff des Anspruchs 1.

Lastfahrzeuge sind üblicherweise mit einem Fahrzeugchassis aus zwei gegenüberliegenden Längsträgern ausgerüstet, die durch mit Abstand zueinander angeordnete Querträger versteift sind. Insbesondere bei Fahrzeugen bis zu einem Nutzlastbereich von 3,5 t sind wechselbare Pritschen oder sonstige Aufbauten, wie Kofferaufbauten, Boxen und dergleichen vorgesehen. Bislang werden zur Befestigung derartiger wechselbarer Pritschen auf Fahrzeugrahmen Hilfsrahmen auf das Chassis aufgesetzt, die an ihrer Oberfläche mit einer entsprechenden Mimikry zur weiteren Aufnahme einer wechselbaren Pritsche ausgerüstet sind. Dieser Hilfsrahmen wird auf Befestigungslaschen befestigt, insbesondere verschweißt, die in Abständen über den beiden Längsträgern vorgesehen sind. Der Nachteil derartiger Hilfsrahmen besteht darin, daß sie einmal zu einer vergleichsweisen hohen Bauweise führen, da die Pritschen auf dem Hilfsrahmen angeordnet sind, der wiederum auf dem Fahrzeugchassis aufbaut. Zudem ergeben sich durch diesen zusätzlichen Hilfsrahmen ein hohes Gewicht, d. h. ergibt sich ein hohes Gewicht, was insbesondere bei Fahrzeugen mit beschränkter Nutzlast von 3,5 t nachteilhaft ist, da derartige Fahrzeuge mit Geschwindigkeiten bis zu 160 km gefahren werden können. Es kommt deswegen aus Gründen des Spritzverbrauchs auf eine Reduzierung des Nutzlastgewichts an.

Aufgabe der Erfindung ist es, eine Vorrichtung an einem Lastfahrzeug zu schaffen, welche bei einfachem Aufbau ein schnelles Aufsetzen einer wechselbaren Pritsche ermöglicht und zwar auch von ungeschultem Personal. Dabei soll es möglichst zu einer entsprechenden Gewichtseinsparung kommen und auch die Bauweise reduziert gehalten werden.

Diese Aufgabe wird erfindungsgemäß durch die im kennzeichnenden Teil des Anspruches 1 genannten Merkmale gelöst, wobei zweckmäßige Weiterbildungen der Erfindung durch die Merkmale der Unteransprüche gekennzeichnet sind.

Nach Maßgabe der Erfindung sind Schnellverschlußeinrichtungen mit Vorspannung auf jeden Befestigungspunkt des Fahrzeugrahmens vorgesehen, so dass Pritschen und dergleichen mittels Riegelelemente auf dem Chassis fixierbar sind. Zweckmäßigerweise sind die Schnellverschlußeinrichtungen über eine Verbindungsmechanik zentral lösbar. Dadurch ergibt sich ein Schnellwechselsystem für Pritschen, Koffer, Boxen und andere Aufbauten auf Kleintransportern und dergleichen. Zweckmäßigerweise werden Schnellverschlußeinrichtungen auf den Längsträgern im Bereich der Befestigungslaschen befestigt, die aus einem Aufnahmeelement gebildet sind, welches auf den Längsträgern montiert wird, ferner ein Aufsteckelement in Art einer Aufsetzbuchse aufweisen sowie einen Riegelbolzen, der unter Vorspannung durch eine Vorspannfeder im Aufnahmeelement aufgenommen ist. Dieser Riegelbolzen wirkt mit einer Riegelleiste zusammen, die in der Aufsetzbuchse aufgenommen ist und zwar verschieblich aufgenommen ist und in eine Verriegelungsstellung in eine Öffnungsstellung bewegt werden kann. In der Öffnungsstellung gibt die Riegelleiste den Riegelbolzen frei, so daß die Pritsche abgehoben werden kann, an deren Unterbau die Aufsetzbuchse angeordnet, insbesondere verschweißt ist.

Zweckmäßigerweise weist der Riegelbolzen an seinem oberen Ende einen aufgeweiteten Riegelkopf auf, der eine sperrende Ringschulter bildet. Die Riegelleiste ist mit einer zentralen Aufnahmeöffnung mit einem Durchmesser ausgebildet, der größer als der Riegelkopf ist, so daß die Aufsetzbuchse mit darin aufgenommenem Riegel bequem über den Riegelkopf auf das Aufnahmeelement aufgesetzt werden kann. Eine Zentrierung erfolgt über entsprechende Zentrierflächen, die sehr wohl umfangsseitig am Aufnahmeelement, wie an der Innenfläche der Aufsetzbuchse angeordnet bzw. ausgebildet sind. Die Riegelleiste weist zweckmäßigerweise Auffahrrampen auf, die im Übergangsbereich zwischen Langloch und Aufnahmeöffnung angeordnet sind. Die Schlitzbreite des Langlochs ist hierbei kleiner als der Durchmesser des Riegelkopfes. Ist die Aufsetzbuchse 19 auf das Aufnahmeelement aufgesetzt, wird über ein Gestänge die Riegelleiste 22 verschoben, so daß der Kopf über das Langloch greift, wobei durch Auffahren auf die beiden Auffahrrampen der Riegelkopf und damit der Riegelbolzen gegen die Wirkung der Vorspannfeder angehoben wird. Deswegen erfolgt eine Verriegelung der Bauteile unter Vorspannung, so daß die Befestigung auch unter dynamischen Lasten, die während des Fahrbetriebs auftreten, wirksam bleibt.

Die Befestigung aber auch die Demontage erfolgt denkbar einfach, wobei die Pritsche infolge der Selbstzentrierung über einen Gabelstapler in einfacher Weise aufgesetzt werden kann. Sobald die Aufsetzbuchsen auf den Aufnahmeelementen sitzen, werden über ein zentrales Gestänge die Rieglleisten betätigt, die dann den Riegelkopf hintergreifen und diesen vorspannen, so daß eine stabile und sichere Befestigung auch gegenüber dynamischen Lasten erzielt wird. Hierbei fällt völlig die Hilfsrahmenkonstruktion weg, so daß insgesamt ein vergleichsweise niedriger Aufbau gewährleistet ist. Die Pritsche sitzt somit unmittelbar auf den Längsträgern auf. Ferner ist auch eine entsprechende Gewichtseinsparung zu verzeichnen.

Nachfolgend wird ein bevorzugtes Ausführungsbeispiel der Erfindung anhand der Zeichnung beschrieben. Darin zeigen
- Fig. 1: eine Draufsicht auf ein Fahrzeug mit Fahrzeugchassis ohne Pritsche zur Darstellung konventioneller Befestigungslaschen;
- Fig. 2: eine Teilansicht des Bauteils A von Fig. 1;
- Fig. 3: eine Schnittansicht durch eine erfindungsgemäße Ausführungsform einer Schnellverschlußeinrichtung;
- Fig. 4: eine perspektivische Ansicht einer Riegelleiste nach der Erfindung sowie
- Fig. 5: eine weitere alternative Ausführungsform in rein schematischer Darstellung

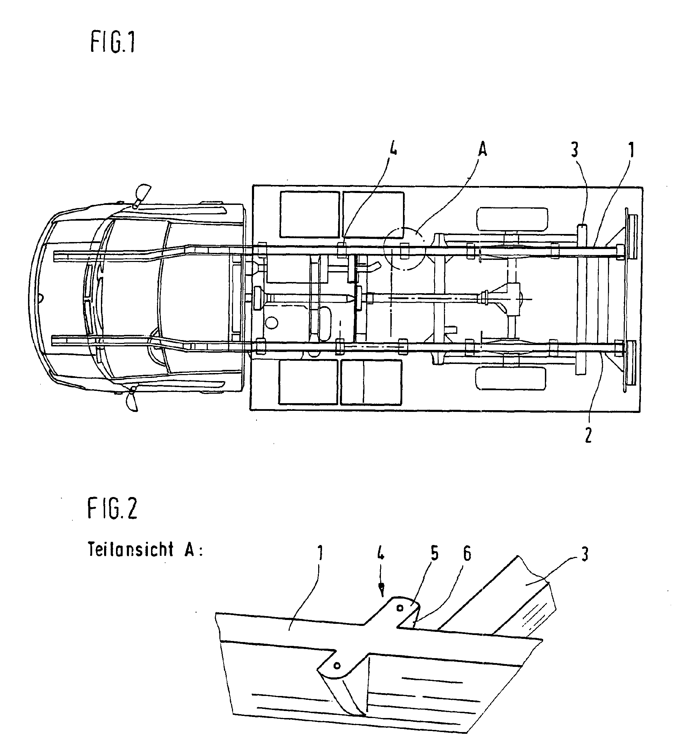

Fig. 1 zeigt in Draufsicht ein Fahrzeug, welches auf eine Nutzlast von 3,5 t ausgelegt ist und einen üblichen konventionellen Fahrzeugrahmen bzw. ein übliches Chassis aufweist. Der Fahrzeugrahmen ist hierbei gebildet aus zwei längs verlaufenden Trägern 1 und 2, die durch Querträger 3 miteinander verbunden sind. Für den Aufbau einer wechselbaren Pritsche sind am Fahrzeugrahmen, nämlich auf den beiden Längsträgern 1 und 2 Befestigungslaschen 4 befestigt, die im Detail besser aus Fig. 2 ersichtlich sind. Es handelt sich hierbei um einen Querflansch 5, der über seitliche Konsolen 6 am Längsträger 1 abgestützt ist. Üblicherweise werden derartige Fahrzeuge mit sechs derartigen Befestigungslaschen auf jedem Längsträger ausgeliefert. Herkömmlich werden für die Anordnung einer wechselbaren Pritsche auf einem solchen Fahrzeugchassis Zwischenkonstruktionen in Art eines Hilfsrahmens verwendet, welcher auf den Befestigungslaschen befestigt wird und eine Mimikry hat, um eine wechselbare Pritsche aufzunehmen.

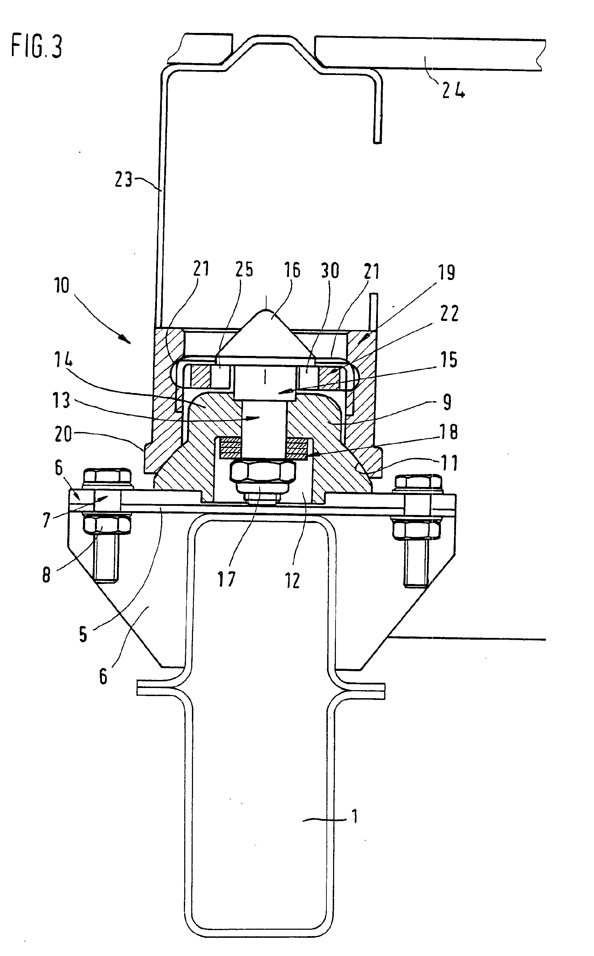

Die Erfindung kommt ohne eine solchen Hilfsrahmen oder Zwischenrahmen aus, indem aus Fig. 3 im Schnitt ersichtliche Schnellverschlußeinrichtungen verwendet werden. Diese sind unmittelbar auf den Längsträgern angeordnet und zwar auf den Befestigungslaschen 4, wobei es im Rahmen der Erfindung liegt, daß die Schnellverschlußeinrichtungen nur auf einen Teil der Befestigungslaschen angeordnet werden, etwa an zwei mit Abstand zueinander angeordneten Befestigungslaschen jedes Längsträgers.

Selbstverständlich können die Schnellverschlußeinrichtungen auch an jeder Befestigungslasche vorgesehen sein, was nach Bedarf gewählt wird.

Die Fig. 3 zeigt einen Längsträger 1 im Schnitt mit der Befestigungslasche 5 und den seitlichen Konsolen 6. Auf der Befestigungslasche 5 ist eine Leiste 6 aufgeschraubt, wobei die beiden Schraubbolzen mit 7 und die Schraubmuttern mit 8 bezeichnet sind. Die Schraubverbindungen sind beidseits vorgesehen und je nach Bedarf können zwei bzw. vier Schraubverbindungen je Befestigungslasche vorgesehen sein. Im dargestellten Ausführungsbeispiel sind zwei gegenüberliegende Schraubverbindungen vorgesehen.

Auf der Tragleiste 6 ist ein mit 9 bezeichnetes Aufnahmeelement befestigt, welches Teil der allgemein mit 10 bezeichneten Schnellverschlußeinrichtung ist. Das Aufnahmeelement 9 ist im wesentlichen topfförmig ausgebildet und umgekehrt, also mit der Topföffnung nach unten auf der Tragleiste 6 aufgenommen. Das Aufnahmeelement 9 ist zweckmäßigerweise als rotationssymmetrischer Körper ausgebildet und weist eine mit 11 bezeichnete umlaufende Kugelkalottenfläche oder Kegelfläche auf. Innerhalb des Topfhohlraumes 12 ist ein Riegelbolzen 13 aufgenommen, der sich durch eine Bohrung im Topfboden 14 erstreckt. Der Riegelbolzen weist im oberen Bereich einen aufgeweiteten Bolzenabschnitt 15 auf, der über den Topfboden 14 vorsteht. Am oberen Ende ist der Riegelbolzen 13 mit einem Riegelkopf 16 versehen, der hier kegelförmig ausgebildet ist. Der Riegelbolzen 13 ist durch eine Schraubmutter 17 befestigt, wobei zwischen Schraubmutter 17 und Topfboden 14 eine Vorspannfeder 18 angeordnet ist, die hier als Tellerfeder ausgebildet ist.

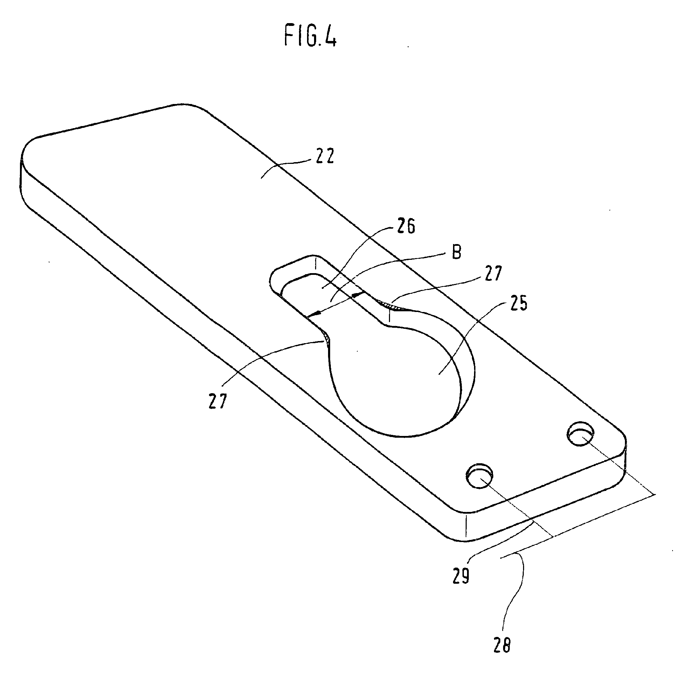

Auf diesem Aufnahmeelement sitzt ein Aufsteckelement auf, welcher hier als Aufsetzbuchse 19 ausgebildet ist. Die Aufsetzbuchse 19 weist an ihrem unteren Ende einen aufgeweiteten Ringflansch 20 auf, der an seiner Innenfläche komplementär zur Kugelkalottenfläche bzw. Kegelfläche 11 des Aufnahmeelements 9 geformt ist. Die Aufsetzbuchse 19 weist zwei gegenüberliegend angeordnete Durchsteckschlitze 21 auf, die zur verschieblichen Aufnahme eines aus Fig. 4 deutlich ersichtlichen Riegelleiste 22 dienen. Die Riegelleiste 22 ist im eingesteckten Zustand, also in dem Zustand, in dem sie durch die ausgerichteten Durchsteckschlitze 21 der Buchse 19 greift, dargestellt. Die Aufsetzbuchse 19 ist hierbei am Unterbau der wechselbaren Pritsche befestigt, der hier mit dem Bezugszeichen 23 angedeutet ist. Die Ladefläche ist mit 24 bezeichnet.

Wie Fig. 4 recht deutlich zeigt, beinhaltet die Riegelleiste 22 eine Aufnahmeöffnung 25. Der Durchmesser der Aufnahmeöffnung 24 ist größer als der Durchmesser des Riegelkopfes 16. In die Aufnahmeöffnung 25 mündet ein Langloch 26, dessen Schlitzbreite B kleiner als der Durchmesser des Riegelkopfes 16, jedoch größer als der Durchmesser des aufgeweiteten Bolzenabschnitts 15 ist.

Wie recht deutlich aus Fig. 4 ersichtlich ist, sind im Übergangsbereich zwischen Langloch 26 und Aufnahmeöffnung 25 Schrägflächen 27 vorgesehen, die Auflauframpen bilden. Die Auflauframpen 27 sind beidseitig vorgesehen. Diese Auflauframpen 27 sind, wie nachstehend noch näher beschrieben wird, zum Spannen des Riegelbolzens 13 gegen die Tellerfedern vorgesehen.

Zum Aufsetzen der Schnellwechselpritsche werden die am Unterbau der Pritsche befestigten Aufsetzbuchsen 19 über einen Gabelstapler grob auf die topfförmigen Aufnahmeelemente ausgerichtet. Dabei befinden sich die in den beiden Schlitzen 21 der Buchse aufgenommenen Riegelleisten 22 in einer Stellung, in welcher die Aufnahmeöffnung 25 zentral ausgerichtet ist, also beim Aufsetzen der Buchse 9 über die aufgeweiteten Riegelköpfe 16 greifen. Nur in dieser Stellung des Querriegels ist ein Aufsetzen der Aufsetzbuchse 19 möglich. Dabei greift die mit großem Durchmesser versehene Aufnahmeöffnung 25 über den Riegelkopf 16. Beim Aufsetzen bzw. beim Absenken der Aufsetzbuchse 19 auf das topfförmige Bauteil 9 erfolgt ein selbsttätiges Zentrieren infolge der Kegelfläche bzw. Kugelkalottenfläche 11. Damit werden die Buchsen sicher aufgesetzt. Dies kann ohne weiteres mit Hilfe eines Gabelstaplers erfolgen.

Sobald die Buchsen 19 aufgesetzt sind, werden die Riegelleisten 22 verschoben, so daß das Langloch 26 in Überdeckung mit dem aufgeweiteten Bolzenabschnitt 15 gelangt. Da die Breite des Langlochschlitzes 26 geringer als der Durchmesser des Riegelkopfes 16 ist, kann in dieser Stellung des Querriegels bzw. der Riegelleiste 22 die Aufsetzbuchse 19 und damit die Pritsche nicht mehr abgehoben werden.

Mit dem Verschieben der Riegelleiste 22 fährt zwangläufig der Riegelkopf 16 auf die Auffahrrampen 27, wodurch der Riegelkopf 16 und damit der Riegelbolzen 13 geringfügig nach oben gezogen werden, was zu einer entsprechenden Vorspannung der Feder 18 führt. In der Verriegelungsstellung, also bei Ausrichtung des Riegelkopfes mit dem Langloch 26 ist damit infolge der Vorspannung die Pritsche auch unter Beachtung der dynamischen Lasten, die im Fahrbetrieb auftreten, fest justiert.

Das Lösen der Schnellverschlußeinrichtungen erfolgt denkbar einfach, indem die Riegelleiste 22 wieder verschoben wird, so daß die Aufnahmeöffnung 25 in Ausrichtung mit dem Kopf 16 gelangt, so daß dann die Pritsche mittels eines Gabelstaplers abgehoben werden kann.

Aus Fig. 4 ist schematisch ein Längsgestänge 28 ersichtlich, welches über Querstangen 29 mit der Riegelleiste 22 verbunden ist. Es können sämtliche Riegelleisten 22 der Schnellverschlußeinrichtungen auf einem Längsträger über das Längsgestänge 28 gekoppelt sein und dadurch mittels einer Spindel oder einem sonstigen Antrieb zentral betätigt werden. Bei Bedarf ist es auch möglich, daß die Querriegel 22 sämtlicher Schnellverschlußeinrichtungen, also auch der Einrichtungen, die auf dem anderen Längsträger angeordnet sind, mit dem Längsgestänge 28 gekoppelt sind. Dann können sämtliche Schnellverschlußeinrichtungen über das Längsgestänge 28 in einem betätigt, also eingerückt bzw. ausgerückt werden.

Ersichtlich bildet der aufgeweitete Riegelkopf 16 eine umlaufende Ringschulter 30, die als Anlagefläche auf der Riegelleiste 22 dient, also von der Riegelleiste 22 in der Verriegelungsstellung unter- bzw. hintergriffen wird.

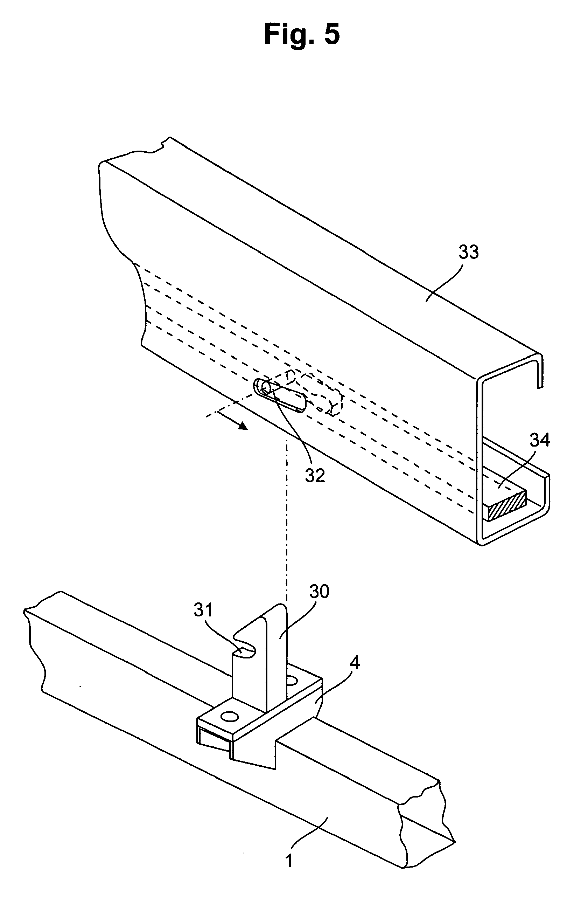

Figur 5 zeigt eine weitere Alternative Ausführungsform einer Schnellverschlußeinrichtung in rein schematischer Darstellung, wobei auf der Befestigungslasche 4 des Längsträgers 1 eine Riegelklinke 30 montiert ist, vorzugsweise aufgeschraubt ist, deren Hakenmaul 31 mit einem Riegelbolzen 32 des Pritschenträgers 33 zur Bildung der Schnellverschlußeinrichtung zusammen wirkt. Die Betätigung des Riegelbolzens 32 erfolgt über eine Leiste 34, die zentral betätigbar ist. Diese Leiste 34 kann auch weitere mit Abstand zum Riegelbolzen 32 vorgesehene Riegelbolzen des Pritschenträgers 33 betätigen. Der Riegelbolzen 32 kann mit einer zeichnerisch nicht dargestellten Spannfeder gekoppelt sein, so dass der Riegelbolzen 32 in die Verriegelungsstellung vorgespannt ist. Anstelle eines solchen Klinken-/ Bolzenverschlusses kann auch ein bajonettartiger Verschluß oder dergleichen Einsatz finden.

## Patentansprüche

1. Lastfahrzeug mit Wechselaufbauten, insbesondere wechselbarer Pritsche, mit einem aus Trägern, insbesondere aus Längsträgern (1, 2) und diese verbindenden Querträger (3) aufgebautem Fahrzeugchassis, wobei auf den Trägern, insbesondere den Längsträgern Befestigungslaschen (4) für die Montage des Wechselaufbaus bzw. der Pritsche vorgesehen sind, **gekennzeichnet durch** auf die oder einen Teil der Befestigungslaschen (4) des Chassis montierbare Schnellverschlußeinrichtungen mit federnder Vorspannung für die unmittelbare Montage der Pritsche über Riegelelemente, wobei die Schnellverschlüsse vorzugsweise über eine Verbindungsmechanik zentral lösbar sind.

2. Lastfahrzeug nach Anspruch 1, **dadurch gekennzeichnet, dass** die Schnellverschlußeinrichtungen (10) jeweils aus einem auf der Befestigungslasche (4) des Chassis montierten Aufnahmeelement (9) mit einem federnd vorgespannten Riegelbolzen (13), einer an der Pritsche montierten Aufsetzbuchse (19) für das Aufsetzen auf das Aufnahmeelement (9) und einer Riegelleiste (22) gebildet sind, die in Schlitzen (21) der Aufsetzbuchse (19) verschiebbar aufgenommen ist und in Verriegelungsstellung eine am Riegelbolzen (13) ausgebildete Schulter (30) hintergreift.

3. Lastfahrzeug nach Anspruch 1 oder 2, **dadurch gekennzeichnet, daß** das Aufnahmeelement (9) als symmetrischer Rotationskörper mit einer zentrierenden Kegel- oder Konusfläche oder Kugelkalottenfläche (11) sowie die Aufsetzbuchse (19) an ihrem Aufsetzende mit einer entsprechenden Konus- oder Kalottenfläche für das selbstzentrierende Aufsetzen versehen sind.

4. Lastfahrzeug nach Anspruch 1, 2 oder 3, **dadurch gekennzeichnet, daß** das Aufnahmeelement (9) im wesentlichen topfförmig ausgebildet ist und sich der Riegelbolzen (13) durch eine Bohrung im Topfboden (14) erstreckt, wobei der Riegelbolzen (13) topfinnenseitig durch eine Schraubmutter (17) befestigt und zwischen Schraubmutter (17) und Topfbodeninnenfläche die vorzugsweise als Tellerfeder (18) ausgebildete Vorspannfeder aufgenommen bzw. angeordnet ist.

5. Lastfahrzeug nach einem der vorhergehenden Ansprüche, **dadurch gekennzeichnet, daß** der Riegelbolzen (13) an seinem über den Topfboden nach außen vorstehenden Ende mit einer gegenüber dem Bolzendurchmesser aufgeweiteten und eine Ringschulter (30) für das Hintergreifen der Riegelleiste (22) aufweisenden Riegelkopf (16) versehen ist, der in Normalstellung in einem etwa der Riegelleistenstärke entsprechenden Abstand oberhalb des Topfbodens für das Zusammenwirken mit der Riegelleiste (22) angeordnet ist.

6. Fahrzeug nach einem der vorhergehenden Ansprüche, **dadurch gekennzeichnet, daß** der Riegelkopf (16) in einer konischen oder kegelförmigen Zentrierfläche versehen bzw. entsprechend konisch oder kegelförmig gestaltet ist.

7. Fahrzeug nach einem der vorhergehenden Ansprüche, **dadurch gekennzeichnet, daß** die Riegelleiste (22) eine Aufnahmeöffnung (25) zum Übergreifen des Riegelkopfs (16) beim Aufsetzen der Aufsetzbuchse (19) auf das Aufnahmeelement (9) aufweist, die in ein Langloch (26) mit einer Schlitzbreite (B) geringer als der Außendurchmesser der Ringschulter (30) übergeht, und daß im Übergangs- bzw. Einmündungsbereich ein Langloch (26) zur Aufnahmeöffnung (25) beidseitig eine Auflauframpe (27) für das Verspannen des Riegelkopfs (16) gegen die Vorspannfeder (18) vorgesehen ist.

8. Lastfahrzeug nach einem der vorhergehenden Ansprüche, **dadurch gekennzeichnet, daß** die Riegelleiste (22) mit einem Längsgestänge (28) verbunden ist, welche zentral betätigbar ist, und die Riegelleiste (22) ein- oder auszurücken.

9. Lastfahrzeug nach einem der vorhergehenden Ansprüche, **dadurch gekennzeichnet, daß** jeweils ein Gestänge (28) für die Riegelleisten (22) der Schnellverschlußeinrichtungen auf einem Längsträger (1, 2) vorgesehen sind.

10. Lastfahrzeug nach einem der Ansprüche 1 bis 7, **dadurch gekennzeichnet, daß** die Riegelleisten (22) der Schnellverschlußeinrichtungen auf den Längsträgern (1, 2) über ein gemeinsames Längsgestänge (28) betätigbar sind.
